(19) Europäisches Patentamt
European Patent Office
Office européen des brevets

(11) **EP 4 192 712 B1**

(12) **EUROPÄISCHE PATENTSCHRIFT**

(45) Veröffentlichungstag und Bekanntmachung des Hinweises auf die Patenterteilung:
**16.10.2024 Patentblatt 2024/42**

(21) Anmeldenummer: **21754914.6**

(22) Anmeldetag: **03.08.2021**

(51) Internationale Patentklassifikation (IPC):
**B60T 13/74** (2006.01) **F16D 55/226** (2006.01)
**F16D 65/00** (2006.01) **F16D 65/18** (2006.01)

(52) Gemeinsame Patentklassifikation (CPC):
**F16D 55/226; B60T 13/741; F16D 65/0025;**
**F16D 65/183;** F16D 2121/24; F16D 2125/08;
F16D 2125/40

(86) Internationale Anmeldenummer:
**PCT/DE2021/200101**

(87) Internationale Veröffentlichungsnummer:
**WO 2022/028658 (10.02.2022 Gazette 2022/06)**

(54) **ELASTOMERDICHTRING FÜR EIN VERBESSERTES ABDICHTUNGSSYSTEM EINER ELEKTRISCH BETÄTIGBAREN KRAFTFAHRZEUGSCHEIBENBREMSE**

ELASTOMER SEALING RING FOR AN IMPROVED SEALING SYSTEM OF AN ELECTRICALLY ACTUATED VEHICLE DISC BRAKE

BAGUE D'ÉTANCHÉITÉ EN ÉLASTOMÈRE POUR UN SYSTÈME D'ÉTANCHÉITÉ AMÉLIORÉ D'UN FREIN À DISQUE À COMMANDE ÉLECTRIQUE POUR VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.08.2020 DE 102020210069**

(43) Veröffentlichungstag der Anmeldung:
**14.06.2023 Patentblatt 2023/24**

(73) Patentinhaber: **Continental Automotive Technologies GmbH**
**30175 Hannover (DE)**

(72) Erfinder:
• **HESS, Thomas**
**60488 Frankfurt am Main (DE)**
• **FÜLLER, Dieter**
**60488 Frankfurt am Main (DE)**
• **SAUER, Florian**
**60488 Frankfurt am Main (DE)**
• **ZEIG, Willi Werner**
**60488 Frankfurt am Main (DE)**

(74) Vertreter: **Continental Corporation**
**c/o Continental Automotive Technologies GmbH**
**Intellectual Property**
**Guerickestr. 7**
**60488 Frankfurt am Main (DE)**

(56) Entgegenhaltungen:
DE-A1- 102013 216 396    DE-C2- 19 732 168
DE-U1- 202020 107 605

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft einen Elastomerdichtring 1, respektive ein Abdichtungssystem 2 für eine, anhand einer Stellvorrichtung durch Stellgetriebe betätigbare, elektrische Kraftfahrzeugscheibenbremse. Im Gegensatz zu rein mechanisch, kolbengestützt, betätigten Kraftfahrzeugscheibenbremsen ist zwecks Stellkraftübertragung in elektrischen Kraftfahrzeugscheibenbremsen in einem Bohrungskompartment, also Bremsgehäuseinnenraum, ein rotatorisch und/oder translatorisch relativbewegbares Stellglied 4 des Stellgetriebe, vorzugsweise in Gestalt von einem Druckstück 22 oder ähnlichem, im Wesentlichen koaxial zur Bohrung gelagert angeordnet, und wobei dem Stellgetriebe ein Abdichtungssystem 2 mit multilateral angepassten Schnittstellen (zumindest ein Dichtspalt in Richtung Bremsgehäuse 3 und zumindest ein Dichtspalt in Richtung Spindel 5) und umfassend einen Elastomerdichtring 1 zugeordnet ist. Die elastomere Ringdichtung ist konzentrisch zu dem Stellglied 4 sowie lateral neben der Kavität 7 im Bereich einer Spindeldurchführung 8 derart eingefügt, dass Spaltabdichtung zwischen Bremsgehäuse 3 und Stellvorrichtung bewirkt ist. Dabei darf es sich bei der Kavität 7 im Kompartment gegebenenfalls um eine - von einem axial verschieblichen Druckstück 22 wie insbesondere vorzugsweise eine von einem hydraulischen Bremskolben o.ä. begrenzte - (Hydraulik-)Kammer der Kraftfahrzeugbremse handeln.

Die DE 197 32 168 C1 betrifft eine elektrisch und mechanisch (d.h. hydraulisch) kombiniert betätigbare Kraftfahrzeugscheibenbremse mit elektrischer Feststelleinrichtung wobei eine drehangetriebene Gewindespindel der Stellvorrichtung mit Drehachse im Zentrum einer Hydraulikkammer in einem Bremsgehäuse axial unverschieblich, fest, abgestützt sowie mittels eines Lagers in einem Gehäuseboden relativ verdrehbar vorgesehen ist, und mit einer drehfest sowie axial verschiebbar in der Hydraulikkammer arrangierten Gewindemutter im Schraubeingriff steht, um mittels Rot->Trans-gewandelter Stellbetätigung einen Scheibenbremsbelag mit Stellkraft zu beaufschlagen. Die Spindel tritt per Spindeldurchführungsbohrung durch den Gehäuseboden, d.h. lateral seitlich aus der Hydraulikkammer. Zwecks Spaltabdichtung der Spindeldurchführung ist unmittelbar angrenzend an einen Lagerrücken eine Nut in den Gehäuseboden eingebracht und in der Nut befindet sich eine Wellendichtung, welche die Dichtigkeit der Hydraulikkammer gewährleistet.

Ein gattungsgemäßes dynamisch innendichtendes Stangenabdichtungssystem mit im Bremsgehäuse statisch ruhend eingefügtem Dichtring muss unter Einwirkung sämtlicher komplexen Bremsbetriebseinwirkungen dauerfest und völlig zuverlässig, sicher, funktionieren, das heißt wenigstens eine Dichtungsfuge elastisch reversibel ausgleichend, quasihermetisch, abdichten. Dies gilt sowohl für die Anfangsdichtigkeit des Systems nach Zusammenbau sämtlicher Komponenten und Systeme am Fahrzeug, wie auch im Fahrzeugbetrieb. In dieser Komplexbeanspruchung sind besonders problematisch: äußere Systemeinwirkung des Beanspruchungskollektivs wie bspw. durch Bewitterungseinwirkung, Korrosion, Peripherieeinwirkung und/oder innere Systemeinwirkung des Bremsbeanspruchungskollektivs beispielsweise additive Überlagerung einer Verpressung mit abzudichtendem (hydraulischem) Systemdruck, tribologische Systemverhältnisse, elastisches Werkstoffverhalten, Spaltextrusion, elastische Bauteildeformation wie Biegung/Knickung und/oder Bauteilversatz, beispielsweise Alterung, (Verschleißteilschräg-)Verschleiß, Toleranzen, statische, dynamische sowie hydraulisch überlagerte Druckbeanspruchungen sowie das entsprechende Betriebstemperaturfenster.

In gegebenem Zusammenhang ist es eine Aufgabe der vorliegenden Erfindung, ein multifunktional weiterentwickelt verbessert konfiguriertes Abdichtungssystem für einen Spindeltrieb einer elektrisch betätigbaren Kraftfahrzeugscheibenbremsen vorzulegen, das sich in Kooperation mit modernen Kraftfahrzeugapplikationen wie auch mit modernen elektronischen Bremssystemen und/oder Bremsfunktionen besonders flexibel, anpassungsfähig sowie dauerfest erweist, ohne dass überbeanspruchungsbedingte Ermüdung, abrasive Schädigung, Ausbrüche, Einschneiden, Spaltextrusion o.ä. Ausfallerscheinung in einer Elastomerdichtung zu befürchten sind.

Auf dieser Grundlage ist zur Sicherstellung der Dichtfunktion erfindungsgemäß erstmals ein Elastomerdichtring 1 mit einem gegebenen Nenndurchmesser Dn und mit einem teilsymetrischen Elastomerdichtringquerschnitt (stets bezogen auf einen entspannten, undeformierten Grundzustand) vorgelegt.

Dabei ist der Elastomerdichtringquerschnitt in Relation zu einer ersten, radial zu einer Stellachse/Reibbelagverschiebungsachse s gerichteten, Bezugsachse M 1 prinzipiell symmetrisch arrangiert. Demgegenüber ist der Elastomerdichtring 1 in Relation zu einer zweiten, axial gerichteten Bezugsachse M 2 (Axialachse = parallel zur Stellachse S) asymmetrisch konfektioniert. Die beiden Bezugsachsen M 1, M 2 stehen orthogonal senkrecht aufeinander, und schneiden einander (im Querschnittzentrum das heißt im Wesentlichen zentral also weitestgehend im Flächenschwerpunkt des Elastomerdichtringquerschnitts), und die Formgebungsangaben beziehen sich dabei grundsätzlich auf einen spannungsfreien, d.h. auf einen neuen, unverzwängten, undeformierten Ausgangszustand des Elastomerdichtrings 1 in Umgebungsatmosphäre, also ohne dass ein Elastomerdichtring 1 mit hydraulischem Druck phyd beaufschlagt, und ohne dass ein Elastomerdichtring 1 in eine Dichtungsaufnahme 9 /multilateral Anlage eingespannt ist. Ganz generell ist damit die Außenkontur des Elastomerdichtrings 1 deckungsgleich, kongruent, mit seiner zugeordneten Dichtungsaufnahme 9.

Dem Elastomerdichtring 1 ist bei einer weitgehend homogenen Elastizitätsverteilung über sein gesamtes Volumen durch seine erfindungsgemäß besondere Struktur und Formgebung, respektive gemeinsam mit einer abgestuften Dichtungsaufnahme 9 - also Platzierung am Arbeitsort - ein besonders wirtschaftliches und vorteilhaftes - nämlich graduell unterschiedliches und gleichwohl ausgewogenes - elastisches Pressur- und Schnittstellenverhalten im Bereich seiner Dichtungsbezirke ermöglicht, ohne dass im Betrieb unter Relativverschiebung und/oder Druck und/oder Kompression und/oder hydraulischem Innendruck ggf. in Kombination mit Druckschwellbeanspruchung eine unnötig große Walk- oder Deformationsarbeit abgefordert würde. Es ist das Verdienst der vorliegenden Erfindung, erkannt zu haben, dass einem Elastomerdichtring 1 eine Beschädigung durch Nibbling oder ähnlichen Effekten erspart werden kann, indem seine weitgehend deckungsgleich-kongruente Aufnahme in einer Dichtungsaufnahme 9 im Wesentlichen keinerlei Walkarbeit erfordert/erlaubt.

Indem jedem erfindungsgemäß gestalteten Elastomerdichtring 1 infolge seiner neuartigen besonderen Formgebung, respektive durch seine weitgehend deckungsgleiche Einpassung in seine entsprechend abgestuft ausgebildete Dichtungsaufnahme 9, eine definiert limitierte elastomere Intrusion (verringertes elastisches Arbeitsvermögen) gestattet ist, ist die vorliegende Aufgabe verblüffend einfach sowie auch effektiv auf Grundlage der erfindungsgemäßen Merkmale gelöst. Ein sehr vorteilhafter Bonuseffekt der vorliegenden Erfindung besteht darin, dass eine entsprechend verstärkt ausgestattete Scheibenbremse geeignet ist, einem Fahrzeugführer auch eine besonders sportliche, d.h. standfeste, Bremsbetätigungsrückmeldung zu erteilen, weil deren interne Elastizität maßgeblich reduziert ist.

In Ausgestaltung ist vorgesehen, dass einem zylindrisch umlaufenden, radial äußeren Umfang des radial verpressten Elastomerdichtrings 1 (Kopfsektor 10, statische Spaltabdichtung zum Bremsgehäuse 3) d.h. radial außen eine besonders stabile ruhende Lagerung/Anordnung in zylindrischer Wandung seiner Dichtungsaufnahme ermöglicht ist, wobei auch insoweit die Dichtungsaufnahme 9 im Wesentlichen ausgefüllt ist. Derartig vorteilhaftes ist in dem einschlägig vorbekannten Stand der Technik gänzlich ohne Vorbild. In weiterer Ausgestaltung der Erfindung ist vorgesehen, dass der erfindungsgemäß ausgelegte Elastomerdichtring 1 außenumfangsseitig (Kopfsektor 10) mit vorgegebener elastischer radialer Vorspannung (Verpressung) in den maximalen Nutgrunddurchmesser Dhmax seine Dichtungsaufnahme 9 eingezwängt ist, indem der entspannt gemessene Elastomerdichtringaußendurchmesser größer ausgebildet ist, als der betreffende maximale Durchmesser im Nutgrund Dhmax seiner Dichtungsaufnahme 9. Dadurch wird eine besonders stabile und dauerfeste flächige Auflage, mit anderen Worten eine sehr robuste Elastomerdichtringallokierung bei minimierter Flächenpressung im Bereich einer weitgehend statisch beanspruchten Spaltabdichtungsschnittstelle ermöglicht, ohne dass die Gefahr besteht, dass der Elastomerdichtring 1 ausknöpft. Weil der Elastomerdichtring 1 bei seiner gegebener Formgebung und nach seiner Positionierung im Kopfsektor 10 (im unbeanspruchten Montagezustand) die Dichtungsaufnahme in diesem Sektor im Wesentlichen vollständig ausfüllt, ist zudem ein beschleunigtes Bremsentlüftungsverhalten positiv unterstützt.

In zusätzlicher Ausgestaltung eines zusätzlich weiterverbesserten Elastomerdichtrings 1 ist dieser (wie grundsätzlich in seinem unbelasteten, undeformierten Zustand) lateral rückseits (Rückensektor 14, gehäuseauflagerseitig, d.h. neben einer Spindellagerung 21 der Spindeldurchführung 8) satt, eben d.h. flächig rückwärtig an einen Dichtungsaufnahmeboden 23 angelegt. Die Dichtungsaufnahme 9 ist demzufolge in diesem Rückensektor 14 weitestgehend vollständig ausgefüllt. Auch hier resultiert daraus ein Sektor mit entsprechend reduziertem elastomeren Arbeitsvermögen unter Betriebsbeanspruchung. Mit anderen Worten ist auch insoweit ein Ausweich- und Deformationsvermögen des Dichtrings 1 unter hydraulischem Druck $p_{hyd}$ limitiert, weil die Dichtungsaufnahme 9 ohnehin weitgehend vollständig durch das rückensektorseitige Elastomerdichtringvolumen des eingefügten Elastomerdichtrings 1 ausgefüllt ist. Dadurch wird es einem verbesserten Elastomerdichtring 1 ermöglicht, Hochdruck-Überbelastung verbessert, das heisst schadenfrei zu überstehen. Infolge Druckschwellbeanspruchung verursachte Nibbling- und/oder Knabberschäden sind demzufolge dauerhaft eliminiert, oder zumindest signifikant reduziert, und das Abdichtungssystem 2 verhält sich demzufolge besonders langlebig und robust. Ergo empfiehlt sich die weitergebildete Konstruktion ganz besonders zur Verwendung für Stellvorrichtungen, die neben einer rein mechanischen Betätigung mit mechanischer Stellvorrichtung - zusätzlich oder ergänzend auch eine überlagerte hydraulische Innendruckbeanspruchung infolge von hydraulischem Hochdruck in einer Kavität 7/Druckkammer erfahren könnten.

In noch weiterer konstruktiver Ausgestaltung der Erfindung ist diametral gegenüberliegend zum Kopfsektor 10/Kopfsektor des Elastomerdichtrings 1 ein Fußsektor 12 zur Abdichtung eines dynamisch beanspruchten Dichtspalts in Richtung einer besonders definiert, abgesetzt und/oder mit besonderer Konzentrizität und/oder fein definiert strukturierter Oberflächenrauheit mikrobearbeitet. Dabei ist die Dichtungsauflagerfläche an der relativbewegbaren Spindel 5 vorzugsweise zylindrisch gestaltet. Weil demzufolge die relativbewegbare Spindel 5 insbesondere axial fest aber relativverdrehbar (vgl. reversierbarer Drehsinn gemäß "rot" in der Fig.) im Bremsgehäuse 3 gelagert ist, resultiert im Fußsektor 12 des Elastomerdichtrings 1, also radial innen, die dynamisch beanspruchte Dichtungsschnittstelle. Ein Fußsektor 12 des Elastomerdichtrings 1 ist zwecks weiterentwickelter Spaltabdichtung in Relation zu besagter Dichtungsauflagerfläche prinzipiell gekrümmt, d.h. rundbogenförmig, ballig geformt, ausgebildet, wodurch der Innenumfang des Elastomerdichtringquerschnitts in Draufsicht mithin gewissermaßen einen nach radial innen weisenden "D-förmig" gekrümmt beschreibbaren Querschnitt ("Buckel") erhalten kann. Das Resultat ist eine weiterentwickelt definiert verändert angepasste Anpressung/Flächenpressung des Elastomerdichtrings 1 im Fußsektor 12. Denn bei quasihomogener und/oder quasihydraulischer Pressurverteilung im Elastomerdichtring 1 ist die demzufolge erhaltene Flächenpressung im Dichtspalt des Kopfsektors 10 jedenfalls im Vergleich zu der erhaltenen Flächenpressung im Fußsektor 12 graduell reduziert ausgeführt. Anders ausgedrückt ist die Flächenpressung am Elastomerdichtring 1 radial innen signifikant höher als radial außen ausgebildet. Ein Scheitelpunkt v des Bogens/Krümmung 13 schneidet sich mit der radial gerichteten Bezugsachse M 2. Lateral seitlich neben dem Scheitelpunkt v befinden sich zwischen Dichtungsaufnahme 9 und Stellglied/Spindel 5 zwei Freiräume 18,19, deren Reservoir/Volumen infolge elastomerer Deformation/Pressur bei Innendruck phyd von dem Elastomerdichtring 1 elastisch reversibel ausgefüllt werden könnten. Die Krümmung/Bogen 13 kann ganz grundsätzlich beliebig vorliegen, wie insbesondere beispielhaft als Sektor eines Kreisradius vorliegen, und wobei andersartige geometrische Bogen- oder Krümmungsformgebungen möglich sind. Die exemplarisch konvex zu der Spindel 5 geführte Krümmung 13 im Fußsektor 12 des Elastomerdichtrings 1 mit zentriertem Scheitelpunkt bewirkt dabei eine zentrierte konzentrierte Auflage und ermöglicht vergleichsweise viel stabilisierenden Freiraum, welcher zur elastischen Elastomerdichtringdeformation unter Hochdruckbeanspruchung angeboten ist. Ein vorteilhafter Begleiteffekt besteht darin, dass dieser Dichtspalt zwischen der gekrümmten D-förmigen Elastomerdichtringformprofilierung und der zylindrischen Dichtungsauflagerfläche 24 der Spindel 5 zwei lateral seitlich zur Bezugsachse M 1 belegene Kammern ausbildet, mit dem Vorteil, dass der Wirkungsgrad der Stellvorrichtung durch reduzierte Schleppwirkung oder unerwünschte Hemmung des Spindelantriebs (Wirkungsgradverschlechterung durch unerwünschte Reibung) verbessert ist.

In fortgesetzter Ausgestaltung einer Ausführungsform der Erfindung verfügt jeder Elastomerdichtring 1 über zwei - zumindest im entspannten Zustand zueinander parallel im Abstand angeordnete, Flanken/Wandseiten 16,17, welche jeweils den Fußsektor 12 mit dem Kopfsektor 10 verbinden. Weitgehend ebene, glatte Flanken/Wandseiten bzw. weitgehend glatt, d.h. eben gestaltete Kopfsektore bewirken eine satte, bündige Fügung/Auflage an der zugewandten Dichtungsaufnahme.

Eine oder mehrere Montagehilfen 25 zum Einpressen des Elastomerdichtrings 1 in die Dichtungsaufnahme 9 sind möglich. Die Montagehilfe 25 kann entweder am Elastomerdichtring 1 und/oder im Bereich der Dichtungsaufnahme 9, und/oder respektive an der Spindel 5 vorliegen. Beliebige Kombination sind auch möglich. Als dichtringseitige Montagehilfe 25 empfiehlt die Erfindung mithin auch, dass in Profilübergängen zwischen Kopfsektor, Wandungen und Fußsektor keinerlei scharfe Ecken oder Kanten sondern Radien r vorliegen, so dass Profilübergänge mit einem definierten Radius r abgerundet ausgebildet sind. Als Bremsgehäuseseitige Montagehilfe 25 sind eine oder mehrere Einführschrägen und/oder Eckausrundungen mit bogen- oder kreisförmigen Eckausrundungen möglich. Dabei dürfen Eckausrundungen als Radiusvorsprung oder als Hohlkehle gestaltet sein.

Es ist möglich, dass ein Elastomerdichtring mit im Querschnitt grundsätzlich "Dförmiger" Struktur vorliegt.

In diesem Kontext darf eine erfindungsgemäß konfektionierte Kraftfahrzeugscheibenbremse grundsätzlich hydraulisch und/oder elektromechanisch betätigbar gestaltet sein. Die Aktuatorik kann wenigstens ein Getriebe inclusive rot-trans-Wandler wie beispielhaft einen Spindel-Mutter-Gewindetrieb umfassen, der mit oder ohne Kugelfüllung gestaltet sein darf. Es ist nicht völlig ausgeschlossen, dass eine Konfigurierung als hydraulikfreie by-wire-Bremse vorliegt.

Das erfindungsgemäße verbesserte Abdichtungssystem dichtet in einem Bremsgehäuse eine Spindeldurchführung zwischen Aktuatorik und Gehäuseinnenraum ab und muss unter Einwirkung aller äußeren Einflüsse einer ruhenden und sich drehenden Spindel (beim Spann- und Lösevorgang der elektrischen Bremse), einer konstruktionsbedingten Schrägstellung der Spindel in Folge der Bremssattelaufweitung beim Zuspannen, sowie dem statischen und hydraulischen Druck im Bremssattel standhalten.

Die vorliegende Erfindung wird anhand der beigefügten Zeichnungen näher beschrieben. Es zeigen im Einzelnen:

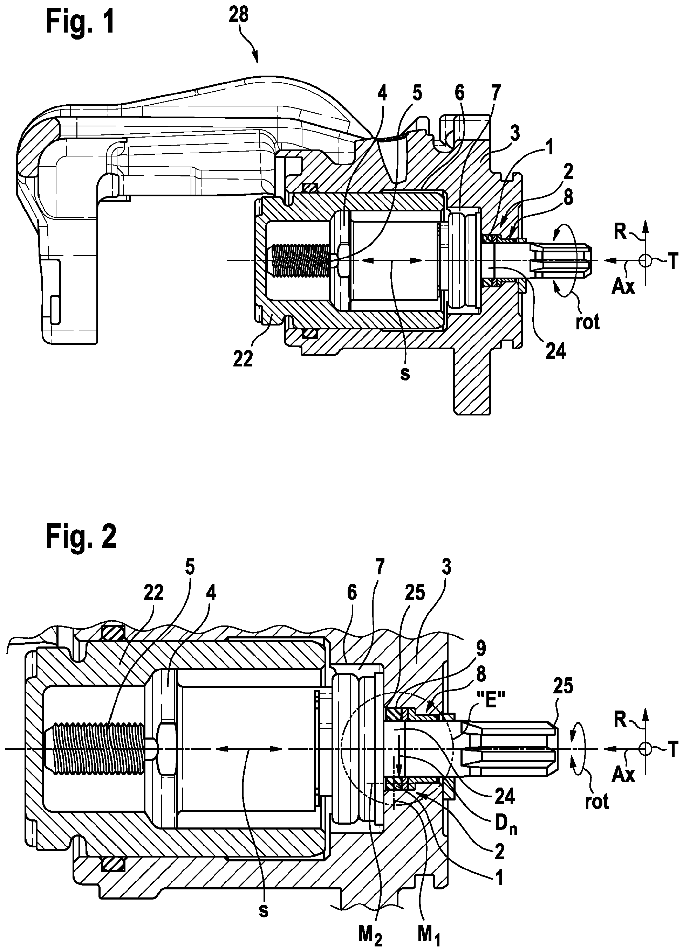

Fig. 1 erfindungsgemäß ausgestatteter Bremssattel vom Faustsatteltyp mit Teilen von Stellvorrichtung, Rot-Trans Wandler, im Schnitt sowie verkleinert;

Fig. 2 vergrößerter Zeichnungsausschnitt mit Dichtschnittstelle, rot- trans-Getriebe inkl. Axiallagereinheit und ein Druckstück (hydr. Bremskolben) gemäß Fig. 1;

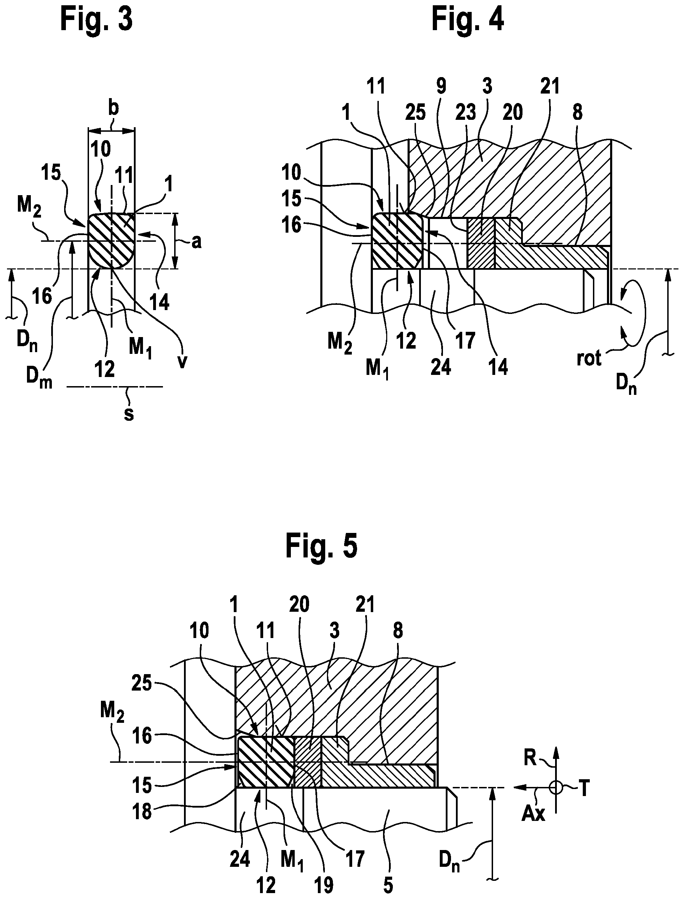

Fig. 3 im Halbschnitt vergrößert ein Teil eines erfindungsgemäßen Elastomerdichtrings,

Fig. 4 der Elastomerdichtring wie in Fig. 3 inclusive peripherer Einbauteile (Stützring -> verhindert Spaltextrusion, Spindellager), jedoch in einer Vormontagestellung, vor Dichtringaufnahme in einem Bremsgehäuse,

Fig. 5 Einzelheit E - der Elastomerdichtring wie in Fig. 3 in seiner montierten Stellung (Einbauraum mit eingesetztem D- förmigen Elastomerdichtring - nahezu ohne ungefüllte "Freiräume" im Bereich der Dichtspalte)

Fig. 6 Einzelheit E - wie Fig. 5 nur unter hydraulischer Innendruckbeanspruchung,

Fig. 7 Einzelheit E - schematisch der vorteilhaft großräumig d.h. flächig verteilt mitgeteilte Kraftfluss auf peripher benachbarte Bauteile (Stützring, Radiallager) infolge hydraulischer Druckbeaufschlagung durch Verwendung des erfindungsgemäßen Elastomerdichtring,

Fig. 8 schematisch im Schnitt vergrößert eine Prinzipskizze zum Einbauraum und mit Dichtspaltverdeutlichung S, und

Fig. 9 stark vergrößert primär der Kopfsektor 10 einer Ausführungsform des erfindungsgemäßen Elastomerdichtrings 1 zwecks Verdeutlichung einer Schräge mit zueinander geneigten Satteldachflächen 26,27 sowie Radien r.

In einem bügel- oder schraubzwingenartig offen gestalteten Brems(sattel)gehäuse 3 einer Kraftfahrzeugscheibenbremse 28 dient eine weitestgehend axial gerichtete (Durchgangs-)Bohrung 6 zur Lagerung, Anordnung sowie Durchführung eines Stellmittels (Spindel 5) einer Stellvorrichtung, und wobei das Stellmittel dazu geeignet und bestimmt ist, anhand einer Rot-Trans-Bewegungswandlung wie insbesondere über eine Gewindemutter, ein Druckstück, und/oder einen hydraulischen Bremskolben einen nicht gezeichneten Scheibenbremsbelag gegen einen Bremsrotor zu pressen.

Erfindungsgemäß liegt eine radial außen gehäuseseitig in einer Dichtungsaufnahme 9 statisch aufgenommene sogenannte "Stangendichtung" in Verbindung mit zirkular geschlossen umlaufendem Elastomerdichtring 1 vor. Die Dichtungsaufnahme 9/Spindeldurchführung 8 ist mit abgesetztem Stufenprofil (Eckradien, d.h. Eckausrundungen, gebrochene Kanten und/oder Fasen sind möglich) als Teil der (Durchgangs-)Bohrung 6 im Bremssattelgehäuse 3 vorgesehen. Dabei füllt der erfindungsgemäße Elastomerdichtring 1 infolge von definierter (vorwiegend radial gerichteter) Pressur (Einspannung) den bereitgestellten Einbauraum in der Dichtungsaufnahme 9. Einbauraum kann als Radialnut im Bremsgehäuse 3 vorliegen, und wobei die Radialnut in Richtung nach radial innen zur Bohrung 6 gerichtet offen ist. Der Einbauraum (Radialnut) ist durch die gegebenen, angrenzenden Bauteile begrenzt. Elastisch auszufüllende Schnittstellen können sich angrenzend zwischen Peripherie, also Außendurchmesser der Radialnut Dhmax, Spindeldurchmesser Dn, Stützring, Radiallager und / oder Bremssattelgehäuse 3, Dichtungsfuge befinden. Mit anderen Worten ist ein (Fugen-)Spaltmaß S für sämtliche Lastfälle und Toleranzlagen weitestgehend vollständig durch elastische Pressur des erfindungsgemäßen Elastomerdichtrings 1 abgedeckt/versperrt/ausgefüllt.

Wie zu ersehen ist, eliminiert ein erfindungsgemäßer Elastomerdichtring 1 verbliebene "Freiräume" 18,19 weitestgehend, zumindest bis auf wenige Ausnahmen. Indem der Elastomerdichtring 1 - bei seiner gegebener Formgebung und mit seiner Positionierung die Peripherie/Dichtungsaufnahme 9 im Wesentlichen vollständig sowie hinterschneidungsfrei ausfüllt, wird ein vorteilhaft beschleunigtes Bremsentlüftungsverhalten erhalten.

Durch die Kontur des vorzugsweise D-förmig gekrümmt ausgeführten Elastomerdichtrings 1 sind verbleibende Freiräume 18,19 im Einbauraum unmittelbar auf ein Minimum reduzieren. Dadurch können massive Schädigungen (z. B. ein Einreißen, Aufplatzen oder Ausbrechen des Dichtringwerkstoffs, Nibbling u.ä.) verhindert werden. Dabei kann die D-Krümmung 13 ganz grundsätzlich beliebig konvex und/oder konkav vorliegen. Alternativ und/oder ergänzend ist es möglich, eine Krümmung 13 aus mehreren, zueinander graduell unterschiedlich dimensionierten geometrischen (Kurven- und/oder Graden-)Stücken zusammengefügte Krümmungskontur respektive eine beliebige Raumformkurve vorzusehen. Herstellungstechnisch vorzugswert erscheint eine Ausgestaltung in Form von einer zusammengefügten, in beliebig viele Sektoren ( 1 - n verschiedene Sektoren) unterscheidbare Kreisbogenkrümmung, die bei Bedarf noch weitere Bestandteile wie beispielhaft eingestreute Gradenstücke aufweisen darf, und wobei weiterhin alternativ noch andersartig gekrümmte geometrische Bogen- oder Krümmungsformgebungen denkbar sind, ohne die Erfindung zu verlassen. Eine wie in der Figur gezeigt einfach bogenförmig konvex zurück geführte Krümmung 13 im Fußsektor 12 des Elastomerdichtrings 1 bewirkt mit Ihrem zentralen Scheitelpunkt v eine günstig - gewissermaßen mittig konzentrierte - Auflage unter entsprechend konzentrierter elastomerer Pressur, und ermöglicht lateral daneben vergleichsweise viel Freiraum 18,19, welcher Aufnahmeraum zwecks elastischer Elastomerdichtringdeformation unter überlagerter Hochdruckbeanspruchung phyd ermöglicht. Mit derartig vorzugsweise nach radial innen konvex gekrümmt verlagerten Elastomerdichtringprofilierung wird im Bereich der lateralen Freiräume 18,19 tendenziell eine Reservoirbildung unterstützt, welche beispielhaft als bremsfluidgefüllte Reservoirkammern vorliegen dürfen, was eine unerwünschte Schleppwirkung und/oder nachteilige Restbremsmomente eliminieren hilft.

Die Erfindung ermöglicht ein vorteilhaftes Verhalten, nachdem Schädigungen durch Überbeanspruchung, Dichtringextrusion bzw. "Nibbling" in Verbindung mit herkömmlichen Elastomerdichtungen auftreten können, weil diese beispielsweise ausgehend von einer simplen originären O-Ring-Formgebung eine übermäßige Pressur und/oder Überbeanspruchung in Verbindung mit hydraulisch überlagerter Druckbeanspruchung erfahren müssen. Denn bei Pulsation, und/oder wiederholten Lastzyklen respektive periodisch wiederkehrenden Bewegungen und / oder auf- und abschwellender elastischer Deformation eines elastischen Dichtringwerkstoffs ist ein reversibles elastisches Arbeitsvermögen endlich, nämlich verschleißbedingt erschöpflich, respektive es kommt zu Einzug-; Nibbling- oder ähnlicher Schädigung eines konventionell strukturierten Wellendichtrings.

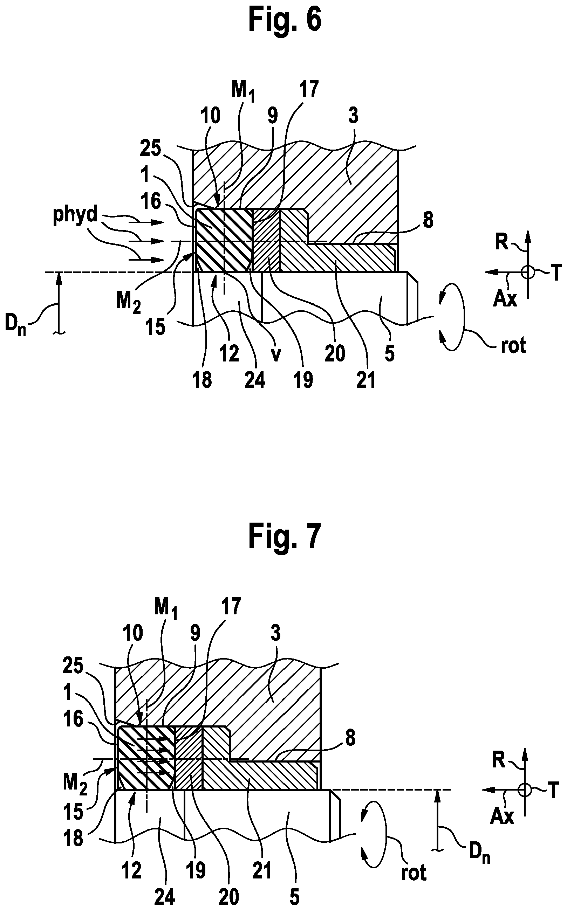

Erfindungsgemäß erstmalig liegt ein Fußsektor 12 so vor, dass dieser auf dem Spindeldurchmesser von radial außen mit Innendurchmesser Dn aufsitzt, und wobei der Elastomerdichtring 1 mit flächenmäßig zurückgenommener Auflage unter elastischer Vorspannung (graduelle elastische Aufweitung des Elastomerdichtrings 1 durch den Spindeldurchmesser + graduelle radiale Verpressung infolge Radialnut mit Dhmax) vorliegt, wie mithin beispielhaft die Fig. 6 zeigt. Die radial innere Flächenpressung - d.h. die Pressur - im Fußsektor 12 ist im Vergleich mit der Pressur im Kopfsektor 10 (Radialnut) erhöht. Die reduzierte flächige Auflagefläche im Fußsektor 12 ermöglicht eine verbesserte Abdichtungsfunktion in Verbindung mit Spindelschrägstellung bzw. Bremssattelaufbiegetendenz unter sehr hoher Last. Am Fußsektor 12 ist die Kontur des "D-förmigen Elastomerdichtrings 1" so ausgelegt, dass einerseits möglichst wenig "unausgefüllter Einbauraum" zur Verfügung steht, und wobei andererseits eine funktionell notwendige (theoretische) Linienberührung zur Spindel erhalten wird.

In weiterer Ausgestaltung einer Ausführungsform der Erfindung verfügt jeder Elastomerdichtring 1 über zwei - zumindest im entspannten Zustand zueinander im Wesentlichen parallel zueinander angeordnete, Flanken 16,17 welche den Fußsektor 12 mit dem Kopfsektor 10 verbinden sowie umgekehrt. Weitgehend ebene, glatte Flanken 16,17 bzw. weitgehend glatt, d.h. überwiegend eben gestaltete Kopfsektoren 10 bewirken vorteilhafterweise eine satte, bündige Fügung also Kooperation mit der zugeordneten Dichtungsaufnahme 9.

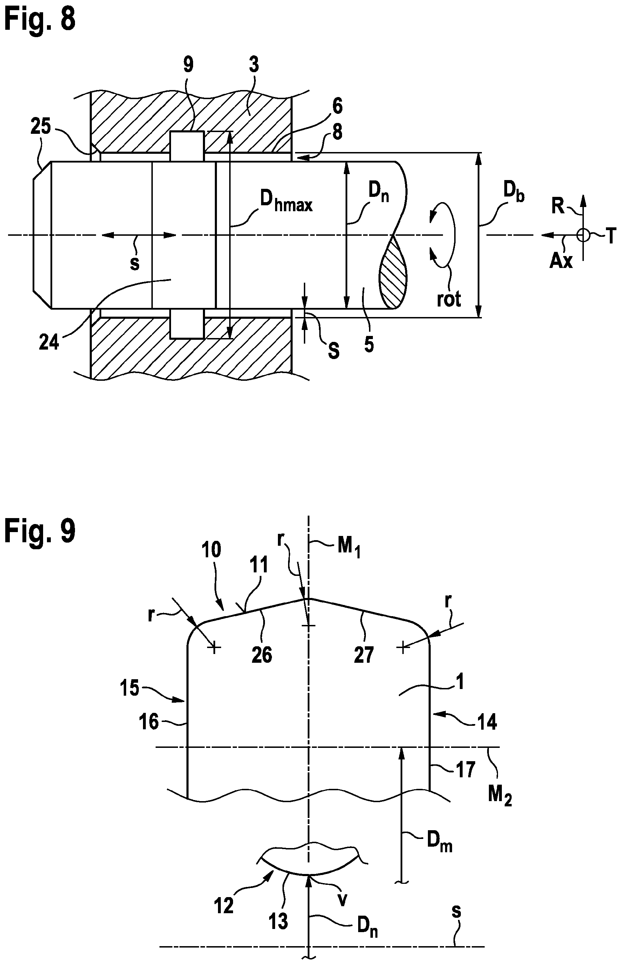

Eine oder mehrere Montagehilfen zum verbesserten Einpressen des Elastomerdichtrings 1 in die Dichtungsaufnahme 9 sind möglich. Die Montagehilfe(n)/ Einführhilfe(n) 25 kann am Elastomerdichtring 1 selbst und/oder im Bereich der Dichtungsaufnahme 9 im Bereich der Bohrung 6 und/oder in Kombination miteinander vorliegen. Dabei kann es sich als Montageerleichterung zudem empfehlen, wenn der Elastomerdichtring 1 insbesondere am Kopfsektor 10 mit einer Schräge wie insbesondere satteldachförmig geneigt und/oder definiert befettet ausgestaltet ist. Die Satteldachflächen 26, 27 können gewissermaßen am Außenumfang konifziert, d.h. im Querschnitt wie in Fig. 9 ersichtlich wechselweise zueinander symmetrisch geneigt arrangiert vorliegen, und/oder beliebig geneigte Schrägflächen (bspw. per mehrfach doppelseitig konifizierter Satteldachausgestaltung vorgesehen sein. Eine Hilfe liegt zudem vor, soweit diese im Bereich der Dichtungsaufnahme 9, Spindel 5 oder Peripherie als eine Fase, Schrägfläche und/oder möglichst umlaufende Einsenkung vorliegt. Als dichtringseitige weitere Vorkehrung - mithin als Montagehilfe - empfiehlt die Erfindung, dass in den umlaufenden Profilübergängen zwischen Kopfsektor 10, Wandungen und Fußsektor 12 keinerlei scharfe Ecken oder Kanten vorliegen, sondern dass derartige Profilübergänge mit einem definierten Radius r abgerundet ausgebildet sind. Als bremsgehäuseseitige Montagehilfe/Einführhilfe 25 sind eine oder mehrere Einführschrägen und/oder Eckausrundungen mit bogen- oder kreisförmigen Eckausrundungen und/oder Hohlkehlen gebildet. Dabei dürfen sämtliche Eckausrundungen als Radiusvorsprung oder als Hohlkehle gestaltet sein, ohne die Erfindung grundsätzlich zu verlassen.

Eine besonders vorteilhafte Wirkung des "D-förmigen Elastomerdichtringdesign" ist aus Fig. 6 + 7 ersichtlich, indem erhellt, dass ein auf das jeweils benachbarte Bauteil - ergo auf den Stützring 20 und / oder auf das Spindellager 21 übertragene Druck selbst bei hydraulisch überlagerter Beanspruchung schadenfrei übertragen und eingeleitet wird. Dadurch wird Fehlstellung, Deplatzierung respektive eine punktuelle Schädigung von Peripheriebauteile vermieden.

Ganz grundsätzlich ist eine erfindungsgemäße Dichtringpressung nach Dichtringmontage bemessen mit mindestens etwas von 5 - 25 % und wobei für diese Pressur die Formel gilt: $\frac{Dn - Dhmax}{Dn} * 100$ . Dabei gilt eine prozentual erhöhte Elastomerdichtringpressur empfohlen für Anwendungsfälle mit entsprechend erhöhter Systemdrucküberlagerung, um entsprechend erhöhte Abdichtungserfordernisse zu erfüllen.

Jeder Elastomerdichtring 1 darf zwecks Montageerleichterung vor seiner Montage mit Bremsflüssigkeit vollgesaugt, wie beispielsweise imprägniert sein. Rein beispielhaft ist es möglich, dass jeder Elastomerdichtring über einen (eindiffundierten) Bremsflüssigkeitsgehalt zwischen mindestens etwas 0 - 10 % verfügt.

## Bezugszeichenliste

1 Elastomerdichtring
2 Abdichtungssystem
3 Bremsgehäuse
4 Stellglied
5 Spindel
6 Bohrung
7 Kavität
8 Spindeldurchführung
9 Dichtungsaufnahme
10 Kopfsektor
11 Wandauflagerfläche
12 Fußsektor
13 Krümmung
14 Rückensektor
15 Frontsektor
16 Flanke

17 Flanke
18 Freiraum
19 Freiraum
20 Stützring
21 Spindellager
22 Druckstück (Bremskolben)
23 Dichtungsaufnahmeboden
24 Dichtungsauflagefläche (spindelseitig)
25 Einführhilfe
26 Satteldachfläche
27 Satteldachfläche
28 Kraftfahrzeugscheibenbremse
Ax Axialrichtung
a Nennhöhe Elastomerdichtring (sog. "Schnurhöhe")
b Nennbreite Elastomerdichtring (sog. "Schnurbreite")
Db Bohrungsdurchmesser
Dm mittlerer (Dichtring-)Durchmesser
Dn Nenndurchmesser (Dichtspalt/Dichtfugendurchmesser ≈ Innendurchmesser Elastomerdichtring)
Dhmax maximaler Nuttiefendurchmesser
E Einzelheit
M1 Bezugsachse
M2 Bezugsachsen
phyd hydraulischer Innendruck
r Radius
R Radialrichtung
rot Dreh-Stellantriebsbewegung
s Stellachse (≈ Mittelachse Elastomerdichtring 1)
S Spaltmaß (Dichtungsfuge) = $Dn - Dhmax$
T Tangentialrichtung
v Scheitelpunkt

**Patentansprüche**

1. Elastomerdichtring (1) für ein Abdichtungssystem (2) einer stellvorrichtungsbetätigten Kraftfahrzeugscheibenbremse mit in einem Bremsgehäuse (3) rotatorisch und/oder translatorisch relativbewegbarem Stellgetriebe mit Stellglied (4), vorzugsweise in Verbindung mit einer Spindel (5), Druckstück (22) oder ähnlichem, welches Stellglied (4) im Bremsgehäuse (3) in einer axial gerichteten Bohrung (6) mit integraler Kavität (7) relativbewegbar gelagert angeordnet ist, und wobei dem Stellgetriebe im Bremsgehäuse (3) ein Abdichtungssystem mit Schnittstellen sowie umfassend ein Elastomerdichtring (1) zugeordnet ist, der in eine Dichtungsaufnahme (9) eingefügt ist, wobei der Elastomerdichtring (1) im Wesentlichen konzentrisch zu dem Stellglied (4) und lateral neben der Kavität (7), insbesondere Hydraulikkammer, unter Anordnung in der Dichtungsaufnahme (9) wenigstens einen oder mehrere Dichtspalt(e) versperrt, **dadurch gekennzeichnet, dass** der Elastomerdichtring (1) über einen teilsymetrischen Elastomerdichtringquerschnitt verfügt, um in seiner Kooperation mit peripheren Schnittstellen eine multilateral unterschiedlich definiert angepasste Spaltabdichtung zu ermöglichen.

2. Elastomerdichtring (1) nach Anspruch 1, **dadurch gekennzeichnet, dass** ein Elastomerdichtringquerschnitt in Bezug auf eine, radial zu einer Stellachse S gerichtete, Bezugsachse M 1 im Wesentlichen symmetrisch arrangiert ist, und dass der Elastomerdichtringquerschnitt in Bezug auf eine, parallel zu der Stellachse S gerichteten, Bezugsachse M 2 im Wesentlichen asymmetrisch konfektioniert ist.

3. Elastomerdichtring (1) nach Anspruch 1 oder 2, **dadurch gekennzeichnet, dass** eine Begrenzung eines Elastomerdichtringquerschnitts aus jeweils mehreren Segmentstücken zusammengesetzt vorgesehen ist, und dass diese begrenzenden Segmentstücke jeweils aus mehreren Geradensegmenten und/oder aus mehreren Bogensegmenten, wie insbesondere aus mehreren Kurvensegmenten, und/oder aus mehreren Kreisbogensegmenten zusammengesetzt vorgesehen sind.

4. Elastomerdichtring (1) nach einem oder mehreren der vorhergehenden Ansprüche, **dadurch gekennzeichnet, dass** der Elastomerdichtring (1) radial außen über einen Kopfsektor (10) mit einem statisch beanspruchten Dichtungsbezirk verfügt.

5. Elastomerdichtring (1) nach Anspruch 4, **dadurch gekennzeichnet, dass** der Kopfsektor (10) des Elastomerdichtrings (1) wenigstens eine geneigte Fläche umfasst.

6. Elastomerdichtring (1) nach Anspruch 5, **dadurch gekennzeichnet, dass** der Kopfsektor (10) des Elastomerdichtrings (1) mehrere zueinander geneigte Dachflächen aufweist.

7. Elastomerdichtring (1) nach Anspruch 5 oder 6, **dadurch gekennzeichnet, dass** der Kopfsektor (10) des Elastomerdichtrings (1) mit Satteldachflächen (26,27) ausgebildet ist.

8. Elastomerdichtring (1) nach einem oder mehreren der vorhergehenden Ansprüche, **dadurch gekennzeichnet, dass** der Elastomerdichtring (1) am Kopfsektor (10) radial außen, umfangsseitig, über eine im Wesentlichen zylindrisch umlaufende, ebene, Wandauflagerfläche (11) verfügt.

9. Elastomerdichtring (1) nach einem oder mehreren der vorhergehenden Ansprüche, **dadurch gekennzeichnet, dass** der Elastomerdichtring (1) radial innen über einen Fußsektor (12) mit einem dynamisch beanspruchten Dichtungsbezirk verfügt.

**10.** Elastomerdichtring (1) nach einem oder mehreren der vorhergehenden Ansprüche, **dadurch gekennzeichnet, dass** der Elastomerdichtring (1) im Fußsektor mit Krümmung (13) uneben geformt ausgebildet ist.

**11.** Elastomerdichtring (1) nach Anspruch 10, **dadurch gekennzeichnet, dass** die Krümmung (13) konvex, und/oder konkav, und/oder ballig und/oder bogenförmig und/oder kreisbogenförmig gekrümmt ausgebildet ist.

**12.** Elastomerdichtring (1) nach einem oder mehreren der vorhergehenden Ansprüche, **dadurch gekennzeichnet, dass** der Elastomerdichtring (1) mit einem Elastomerdichtringquerschnitt D-förmig ausgebildet ist.

**13.** Elastomerdichtring (1) nach einem oder mehreren der vorhergehenden Ansprüche, **dadurch gekennzeichnet, dass** eine hydraulische Innendruckerhöhung (phyd) in der Kavität (7) durch eine erhöhte elastische Deformation des Elastomerdichtrings (1) automatisch eine adaptive, relativ zueinander unterschiedlich abgestufter Dichtwirkung durch unterschiedlich angepasste Flächenpressung in Kopfsektor (10), und/oder Fußsektor (12) und/oder Rückensektor (14) des Elastomerdichtrings (1) bewirkt.

**14.** Elastomerdichtring (1) nach einem oder mehreren der vorhergehenden Ansprüche, **dadurch gekennzeichnet, dass** der Elastomerdichtring mit Bremsflüssigkeit imprägniert ist, und/oder dass der Elastomerdichtring über einen eingelagerten Bremsflüssigkeitsgehalt zwischen mindestens etwas 0 - 10 % verfügt.

**15.** Abdichtungssystem (2) für eine Kraftfahrzeugscheibenbremse umfassend einen Elastomerdichtring (1) nach einem oder mehreren der vorhergehenden Ansprüche, **dadurch gekennzeichnet, dass** eine elastische Kontaktauflage zwischen Elastomerdichtring (1) und Dichtungsaufnahme (9) derart vorgesehen ist, dass eine Elastomerdichtringflächenpressung im Kopfsektor (10) des Elastomerdichtrings (1) geringer ausgebildet ist, als eine Elastomerdichtringflächenpressung im Fußsektor (12) des Elastomerdichtrings (1).

**16.** Abdichtungssystem (2) nach Anspruch 15, **dadurch gekennzeichnet, dass** für das Abdichtungssystem eine definiert limitierte radiale elastische Verpressung wie folgt vorgesehen ist:

$$\frac{S}{Dn} * 100 \geq 5\,\%$$

**17.** Abdichtungssystem (2) nach Anspruch 15 und/oder 16, **dadurch gekennzeichnet, dass** für das Abdichtungssystem eine definiert limitierte elastische radiale Verpressung wie folgt vorgesehen ist:

$$\frac{S}{Dn} * 100 \leq 25\,\%$$

**18.** Abdichtungssystem (2) nach einem oder mehreren der Ansprüche 15 - 17, **dadurch gekennzeichnet, dass** eine limitierte elastische Verpressung im Bereich zwischen mindestens etwas 5 - 25 % vorgesehen ist.

**19.** Kraftfahrzeugscheibenbremse (28) mit einem Abdichtungssystem (2) umfassend wenigstens einen Elastomerdichtring (1) mit den Merkmalen nach einem oder mehreren der vorhergehenden Ansprüche 1 - 14.

**Claims**

**1.** Elastomer sealing ring (1) for a sealing system (2) of an actuator-actuated motor vehicle disc brake having an actuating mechanism which is movable relative thereto in a rotational and/or translational manner in a brake housing (3) and has an actuating element (4), preferably in conjunction with a spindle (5), a thrust piece (22) or the like, which actuating element (4) is mounted in the brake housing (3) so as to be movable relative thereto in an axially directed bore (6) with an integral cavity (7), and wherein the actuating mechanism in the brake housing (3) is assigned a sealing system with interfaces and also comprising an elastomer sealing ring (1) which is fitted into a sealing receptacle (9), wherein the elastomer sealing ring (1) blocks at least one or more sealing gap(s) substantially concentrically with respect to the actuating element (4) and laterally next to the cavity (7), in particular a hydraulic chamber, by being arranged in the sealing receptacle (9), **characterized in that** the elastomer sealing ring (1) has a partially symmetrical elastomer sealing ring cross section in order to permit a gap seal which is adapted in a multilaterally differently defined way in its cooperation with peripheral interfaces.

**2.** Elastomer sealing ring (1) according to Claim 1, **characterized in that** an elastomer sealing ring cross section is arranged substantially symmetrically in relation to a reference axis M 1, which is directed radially with respect to an actuating axis S, and **in that** the elastomer sealing ring cross section is produced substantially asymmetrically in relation to a reference axis M 2, which is directed parallel to the actuating axis S.

3. Elastomer sealing ring (1) according to Claim 1 or 2, **characterized in that** a delimitation of an elastomer sealing ring cross section composed respectively of a plurality of segment pieces is provided, and **in that** said delimiting segment pieces each composed of a plurality of rectilinear segments and/or of a plurality of arc segments, such as in particular of a plurality of curved segments, and/or of a plurality of circular arc segments are provided.

4. Elastomer sealing ring (1) according to one or more of the preceding claims, **characterized in that** the elastomer sealing ring (1) has, radially on the outside, a head sector (10) with a statically stressed sealing area.

5. Elastomer sealing ring (1) according to Claim 4, **characterized in that** the head sector (10) of the elastomer sealing ring (1) comprises at least one inclined surface.

6. Elastomer sealing ring (1) according to Claim 5, **characterized in that** the head sector (10) of the elastomer sealing ring (1) has a plurality of roof surfaces inclined in relation to one another.

7. Elastomer sealing ring (1) according to Claim 5 or 6, **characterized in that** the head sector (10) of the elastomer sealing ring (1) is designed with pitched roof surfaces (26, 27).

8. Elastomer sealing ring (1) according to one or more of the preceding claims, **characterized in that** the elastomer sealing ring (1) on the head sector (10) has, radially on the outside and peripherally, a substantially cylindrically circumferential, flat wall bearing surface (11).

9. Elastomer sealing ring (1) according to one or more of the preceding claims, **characterized in that** the elastomer sealing ring (1) has, radially on the inside, a foot sector (12) with a dynamically stressed sealing area.

10. Elastomer sealing ring (1) according to one or more of the preceding claims, **characterized in that** the elastomer sealing ring (1) is unevenly shaped in the foot sector with a curvature (13).

11. Elastomer sealing ring (1) according to Claim 10, **characterized in that** the curvature (13) is convex and/or concave and/or crowned and/or arcuate and/or curved in the shape of a circular arc.

12. Elastomer sealing ring (1) according to one or more of the preceding claims, **characterized in that** the elastomer sealing ring (1) with an elastomer sealing ring cross section is D-shaped.

13. Elastomer sealing ring (1) according to one or more of the preceding claims, **characterized in that** a hydraulic internal pressure increase (phyd) in the cavity (7) because of an increased elastic deformation of the elastomer sealing ring (1) automatically brings about an adaptive sealing effect, differently graduated relative to one other, by means of a differently adapted surface pressure in the head sector (10) and/or foot sector (12) and/ or back sector (14) of the elastomer sealing ring (1).

14. Elastomer sealing ring (1) according to one or more of the preceding claims, **characterized in that** the elastomer sealing ring is impregnated with brake fluid, and/or **in that** the elastomer sealing ring has an embedded brake fluid content of between at least 0 - 10%.

15. Sealing system (2) for a motor vehicle disc brake comprising an elastomer sealing ring (1) according to one or more of the preceding claims, **characterized in that** an elastic contact support between the elastomer sealing ring (1) and the sealing receptacle (9) is provided in such a way that the elastomer sealing ring surface pressure in the head sector (10) of the elastomer sealing ring (1) is lower than an elastomer sealing ring surface pressure in the foot sector (12) of the elastomer sealing ring (1).

16. Sealing system (2) according to Claim 15, **characterized in that** a defined, limited elastic radial compression is provided for the sealing system as follows:

$$\frac{S}{Dn} * 100 \geq 5\%$$

17. Sealing system (2) according to Claim 15 and/or 16, **characterized in that** a defined, limited elastic radial compression is provided for the sealing system as follows:

$$\frac{S}{Dn} * 100 \leq 25\%$$

18. Sealing system (2) according to one or more of Claims 15 - 17, **characterized in that** a limited elastic compression in the range between at least 5 - 25% is provided.

19. Motor vehicle disc brake (28) with a sealing system (2) comprising at least one elastomer sealing ring (1) having the features according to one or more of the preceding Claims 1 - 14.

**Revendications**

1. Bague d'étanchéité en élastomère (1) pour un système d'étanchéité (2) d'un frein à disque de véhicule automobile actionné par un dispositif de réglage, avec un mécanisme de réglage pouvant effectuer un mouvement relatif de rotation et/ou de translation dans un boîtier de frein (3), avec un organe de réglage (4), de préférence en liaison avec une broche (5), une pièce de pression (22) ou similaire, lequel organe de réglage (4) est agencé en étant monté dans le boîtier de frein (3) de manière à pouvoir effectuer un mouvement relatif dans un alésage (6) orienté axialement avec une cavité (7) intégrale, et un système d'étanchéité avec des interfaces et comprenant une bague d'étanchéité en élastomère (1) étant associé au mécanisme de réglage dans le boîtier de frein (3), qui est inséré dans un logement d'étanchéité (9), la bague d'étanchéité en élastomère (1) obstruant au moins une ou plusieurs fente(s) d'étanchéité essentiellement concentriquement à l'organe de réglage (4) et latéralement à côté de la cavité (7), notamment de la chambre hydraulique, en étant agencée dans le logement d'étanchéité (9), **caractérisée en ce que** la bague d'étanchéité en élastomère (1) dispose d'une section transversale de bague d'étanchéité en élastomère partiellement symétrique, afin de permettre, dans sa coopération avec des interfaces périphériques, une étanchéité de fente adaptée de manière multilatérale définie différemment.

2. Bague d'étanchéité en élastomère (1) selon la revendication 1, **caractérisée en ce qu'**une section transversale de bague d'étanchéité en élastomère est arrangée de manière essentiellement symétrique par rapport à un axe de référence M 1 dirigé radialement vers un axe de réglage S, et **en ce que** la section transversale de bague d'étanchéité en élastomère est réalisée de manière essentiellement asymétrique par rapport à un axe de référence M 2 dirigé parallèlement à l'axe de réglage S.

3. Bague d'étanchéité en élastomère (1) selon la revendication 1 ou 2, **caractérisée en ce qu'**une délimitation d'une section transversale de bague d'étanchéité en élastomère est prévue composée de plusieurs pièces de segment respectives, et **en ce que** ces pièces de segment de délimitation sont prévues respectivement composées de plusieurs segments de droite et/ou de plusieurs segments d'arc, tel que notamment de plusieurs segments de courbe, et/ou de plusieurs segments d'arc de cercle.

4. Bague d'étanchéité en élastomère (1) selon une ou plusieurs des revendications précédentes, **caractérisée en ce que** la bague d'étanchéité en élastomère (1) dispose radialement à l'extérieur d'un secteur de tête (10) avec une zone d'étanchéité soumise à une charge statique.

5. Bague d'étanchéité en élastomère (1) selon la revendication 4, **caractérisée en ce que** le secteur de tête (10) de la bague d'étanchéité en élastomère (1) comprend au moins une surface inclinée.

6. Bague d'étanchéité en élastomère (1) selon la revendication 5, **caractérisée en ce que** le secteur de tête (10) de la bague d'étanchéité en élastomère (1) présente plusieurs surfaces de toit inclinées les unes par rapport aux autres.

7. Bague d'étanchéité en élastomère (1) selon la revendication 5 ou 6, **caractérisée en ce que** le secteur de tête (10) de la bague d'étanchéité en élastomère (1) est configuré avec des surfaces de toit en pente (26, 27).

8. Bague d'étanchéité en élastomère (1) selon une ou plusieurs des revendications précédentes, **caractérisée en ce que** la bague d'étanchéité en élastomère (1) dispose sur le secteur de tête (10), radialement à l'extérieur, côté périphérie, d'une surface d'appui de paroi (11) plane, périphérique, essentiellement cylindrique.

9. Bague d'étanchéité en élastomère (1) selon une ou plusieurs des revendications précédentes, **caractérisée en ce que** la bague d'étanchéité en élastomère (1) dispose radialement à l'intérieur d'un secteur de pied (12) avec une zone d'étanchéité soumise à des charges dynamiques.

10. Bague d'étanchéité en élastomère (1) selon une ou plusieurs des revendications précédentes, **caractérisée en ce que** la bague d'étanchéité en élastomère (1) est configurée en étant formée de manière inégale dans le secteur de pied avec courbure (13).

11. Bague d'étanchéité en élastomère (1) selon la revendication 10, **caractérisée en ce que** la courbure (13) est configurée sous forme convexe et/ou concave, et/ou bombée et/ou en forme d'arc et/ou en forme d'arc de cercle.

12. Bague d'étanchéité en élastomère (1) selon une ou plusieurs des revendications précédentes, **caractérisée en ce que** la bague d'étanchéité en élastomère (1) est configurée avec une section transversale de bague d'étanchéité en élastomère en forme de D.

13. Bague d'étanchéité en élastomère (1) selon une ou plusieurs des revendications précédentes, **caractérisée en ce qu'**une augmentation de la pression interne hydraulique (phyd) dans la cavité (7) par une déformation élastique accrue de la bague d'étanchéité en élastomère (1) provoque automatiquement un effet d'étanchéité adaptatif, échelonné différemment les uns par rapport aux autres, par une pression de surface adaptée différemment dans le secteur de tête (10), et/ou le secteur de pied (12) et/ou le secteur de dos (14) de la bague d'étanchéité en élastomère (1).

**14.** Bague d'étanchéité en élastomère (1) selon une ou plusieurs des revendications précédentes, **caractérisée en ce que** la bague d'étanchéité en élastomère est imprégnée de liquide de frein et/ou **en ce que** la bague d'étanchéité en élastomère dispose d'une teneur en liquide de frein incorporée entre au moins approximativement 0 à 10 %.

**15.** Système d'étanchéité (2) pour un frein à disque de véhicule automobile comprenant une bague d'étanchéité en élastomère (1) selon une ou plusieurs des revendications précédentes, **caractérisé en ce qu'**un appui de contact élastique est prévu entre la bague d'étanchéité en élastomère (1) et le logement de joint (9) de telle sorte qu'une pression de surface de bague d'étanchéité en élastomère dans le secteur de tête (10) de la bague d'étanchéité en élastomère (1) est configurée plus faible qu'une pression de surface de bague d'étanchéité en élastomère dans le secteur de pied (12) de la bague d'étanchéité en élastomère (1).

**16.** Système d'étanchéité (2) selon la revendication 15, **caractérisé en ce qu'**il est prévu pour le système d'étanchéité une compression élastique radiale limitée de manière définie comme suit :

$$\frac{S}{Dn} * 100 \geq 5\,\%$$

**17.** Système d'étanchéité (2) selon la revendication 15 et/ou 16, **caractérisé en ce qu'**il est prévu pour le système d'étanchéité une compression radiale élastique limitée de manière définie comme suit :

$$\frac{S}{Dn} * 100 \leq 25\,\%$$

**18.** Système d'étanchéité (2) selon une ou plusieurs des revendications 15 à 17, **caractérisé en ce qu'**il est prévu une compression élastique limitée dans la plage entre au moins approximativement 5 à 25 %.

**19.** Frein à disque de véhicule automobile (28) avec un système d'étanchéité (2) comprenant au moins une bague d'étanchéité en élastomère (1) ayant les caractéristiques selon une ou plusieurs des revendications 1 à 14 précédentes.

EP 4 192 712 B1

**Fig. 1**

**Fig. 2**

# Fig. 3

# Fig. 4

# Fig. 5

# Fig. 6

# Fig. 7

## Fig. 8

## Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19732168 C1